# FASCICULE DE BREVET EUROPEEN

(11) **EP 1 838 971 B1**
(45) Date de publication et mention de la délivrance du brevet: **04.08.2010**
(21) Numéro de dépôt: 06709410.2
(22) Date de dépôt: 19.01.2006
(51) Int. Cl.: F16D 29/00, F16D 27/00, F16D 23/12

(54) **DISPOSITIF DE COMMANDE DESTINE PAR EXEMPLE A ETRE RELIE A UN EMBRAYAGE DE VEHICULE AUTOMOBILE**
STEUERUNGSVORRICHTUNG Z. B. ZUR VERBINDUNG MIT EINER KRAFTFAHRZEUGKUPPLUNG
CONTROL DEVICE FOR CONNECTION TO A MOTOR VEHICLE CLUTCH FOR EXAMPLE

(30) Priorité: 21.01.2005 FR 0550194
(43) Date de publication de la demande: 03.10.2007
(73) Titulaire: Valeo Embrayages, 80009 Amiens Cedex 1 (FR)
(72) Inventeur: LEBAS, Gilles, 80800 Villers Bretonneux (FR); DELEVALLEE, Jean-louis, F-80000 Amiens (FR)
(74) Mandataire: Lemaire, Marc
(86) Numéro de dépôt international: PCT/FR2006/050023
(87) Numéro de publication internationale: WO 2006/077345

(56) Documents cités:
- FR-A- 2 568 199
- FR-A- 2 749 636
- FR-A- 2 785 690
- FR-A- 2 810 381

## Description

La présente invention concerne un dispositif de commande destiné par exemple à être relié à un embrayage de véhicule automobile.

On connaît déjà dans l'état de la technique, notamment d'après FR-A-2 564 999, un dispositif de commande du type comprenant :
- un organe menant relié cinématiquement à un organe mené, et
- des moyens d'assistance à l'entraînement de l'organe mené munis de moyens de sollicitation élastique de l'organe mené.

Un dispositif de ce type permet de commander divers organes, notamment un embrayage pour véhicule, à l'aide de moyens motorisés. Dans ce cas, l'organe menant est un arbre de moteur électrique.

Les moyens d'assistance permettent de limiter la taille du moteur en fournissant un effort d'assistance à l'entraînement de l'organe mené.

FR-A-2 564 999 propose de relier cinématiquement l'organe menant à l'organe mené à l'aide de moyens à vis sans fin. FR-A-2 564 999 propose également un agencement particulier des moyens d'assistance présentant une relative efficacité.

Toutefois, dans FR-A-2 564 999, l'organe mené est un arbre rotatif.

Or, dans certaines applications, l'organe mené est destiné à être déplacé en translation et non en rotation. C'est le cas notamment d'une commande hydraulique dans laquelle l'organe mené forme une tige de piston déplaçable en translation dans un corps de vérin hydraulique.

L'utilisation d'un dispositif de commande tel que proposé dans FR-A-2 564 999 pour commander un organe mené déplaçable en translation ou suivant un mouvement sensiblement rectiligne requiert des moyens de transformation de mouvement de rotation en mouvement de translation engendrant des frottements supplémentaires et limitant par conséquent le rendement du dispositif de commande.

L'invention a notamment pour but de proposer un dispositif de commande du type décrit dans FR-A-2 564 999 susceptible d'entraîner un organe mené suivant des déplacements sensiblement rectilignes, ce dispositif ayant par ailleurs un rendement optimisé. Le document FR 2 810 381 révèle le préambule de la revendication 1.

A cet effet, l'invention a pour objet un dispositif de commande du type précité dont les moyens d'assistance comprennent un levier du troisième genre muni d'une extrémité, dite extrémité d'appui, articulée autour d'un axe géométrique fixe, et d'une extrémité reliée à l'organe mené, dite extrémité de résistance, les moyens de sollicitation élastique appliquant un effort élastique d'assistance entre les extrémités d'appui et de résistance du levier d'assistance, l'organe menant étant relié cinématiquement au levier d'assistance.

Les déplacements de l'extrémité de résistance du levier d'assistance sont sensiblement rectilignes et donc susceptibles d'entraîner de façon sensiblement rectiligne l'organe mené relié à cette extrémité de résistance.

Par ailleurs, le levier d'assistance, articulé autour d'un axe géométrique, forme un organe pivotant peu sensible aux frottements, optimisant ainsi le rendement du dispositif de commande.

Suivant des caractéristiques optionnelles de différents modes de réalisation de ce dispositif de commande :
- les moyens de sollicitation élastique comprennent au moins un ressort de poussée agencé entre des sièges fixe et mobile, le siège mobile portant un organe de contact destiné à coopérer avec une came, solidaire du levier d'assistance, intercalée entre les extrémités d'appui et de résistance de ce levier d'assistance ;
- la came est rapportée sur le levier d'assistance;
- la came est venue de matière avec le levier d'assistance ;
- le levier comprend deux joues sensiblement planes, entretoisées parallèlement à l'axe d'articulation de ce levier, la came comprenant une surface de came ménagée sur chaque joue, de préférence sur la tranche de chaque joue, le ressort de poussée s'étendant entre les deux joues ;
- les moyens de sollicitation élastique comprennent deux ressorts de poussée coaxiaux logés l'un dans l'autre ;
- le siège fixe est intercalé sensiblement entre l'extrémité d'appui du levier d'assistance et la came solidaire de ce levier ;
- l'organe de contact comprend au moins un galet destiné à rouler sur la came ;
- l'organe de contact comprend deux galets destinés à rouler sur la came, disposés l'un derrière l'autre en considérant le sens de déplacement du levier d'assistance ;
- l'organe de contact comprend deux galets coaxiaux destinés à rouler sur les surfaces de came des deux joues ;
- l'organe menant est un arbre de moteur électrique couplé à un pignon engrenant avec une denture complémentaire portée par l'extrémité de résistance du levier d'assistance ;
- l'arbre de moteur électrique est couplé au pignon par des moyens à engrenage, notamment des moyens de réduction de type épicycloïdal ;
- l'organe mené est solidaire d'une tige de piston de vérin hydraulique ou d'un élément de tringlerie de commande ;
- l'organe mené est destiné à être relié à un embrayage de véhicule automobile.

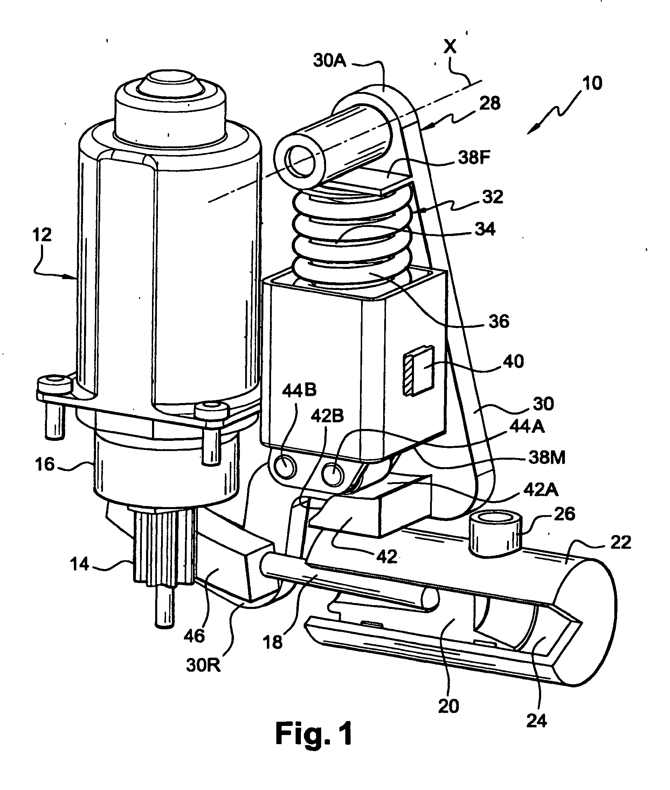

L'invention sera mieux comprise à la lecture de la description qui va suivre, donnée uniquement à titre d'exemple et faite en se référant aux dessins annexés dans lesquels les figures 1 à 3 sont des vues en perspective d'un dispositif de commande selon respectivement trois modes de réalisation de l'invention.

On a représenté sur la figure 1 un dispositif de commande selon un premier mode de réalisation de l'invention, désigné par la référence générale 10.

Dans l'exemple décrit, le dispositif de commande 10 est destiné à être relié à un embrayage de véhicule automobile.

Le dispositif de commande 10 comprend un organe menant relié cinématiquement à un organe mené.

Dans l'exemple décrit, l'organe menant est un arbre de moteur électrique 12. Cet arbre est couplé à un pignon 14 par des moyens 16 à engrenage, de préférence des moyens de réduction de type épicycloïdal. Ce type de moyens de réduction présente un rendement relativement élevé et un encombrement réduit.

Dans l'exemple décrit, l'organe mené forme un organe d'entrée de commande hydraulique. En effet, l'organe mené est une tige 18 de piston 20 de vérin hydraulique. Plus généralement, l'organe mené pourrait être distinct de cette tige 18 tout en étant solidaire de cette tige 18.

On a également représenté sur la figure 1 un corps 22 du vérin hydraulique dans lequel coulisse le piston 20. Ce corps 22 délimite une chambre hydraulique 24 communiquant, par l'intermédiaire de moyens classiques 26 de raccordement, avec un circuit de commande hydraulique de l'embrayage.

En variante, la commande hydraulique peut être remplacée par une commande mécanique. Dans ce cas, l'organe mené est généralement solidaire d'un élément classique de tringlerie de commande.

Pour la compréhension de ce qui suit, on rappellera qu'un levier est une machine simple dont on distingue généralement trois genres.

Un levier est dit du premier genre, ou inter-mobile, lorsque l'axe d'articulation de ce levier (point d'appui) est placé entre, d'une part, une partie de manoeuvre de ce levier, sur laquelle est appliquée une force de manoeuvre du levier (ou puissance), et, d'autre part, une partie active de ce levier, sur laquelle est exercée une force de résistance.

Un levier est dit du deuxième genre, ou inter-résistant, lorsque la partie active de ce levier est placée entre l'axe d'articulation et la partie de manoeuvre du levier.

Enfin, un levier est dit du troisième genre ou inter-puissant, lorsque la partie de manoeuvre de ce levier est placée entre l'axe d'articulation et la partie active de ce levier.

Le dispositif de commande 10 comprend également des moyens 28 d'assistance à l'entraînement de l'organe mené 18.

Ces moyens d'assistance 28 comprennent un levier 30 du troisième genre muni d'une extrémité d'appui 30A articulée autour d'un axe géométrique fixe X, et d'une extrémité de résistance 30R reliée à l'organe mené 18.

Les moyens d'assistance 28 comprennent également des moyens 32 de sollicitation élastique de l'organe mené 18. Ces moyens 32 appliquent un effort élastique d'assistance entre les extrémités d'appui 30A et de résistance 30R du levier d'assistance.

Les moyens 32 de sollicitation élastique comprennent au moins un ressort de poussée, de préférence deux ressorts de poussée 34, 36 comme illustré sur la figure 1, agencés entre des premier 38F et second 38M sièges d'appui.

Les deux ressorts 34, 36, de type à boudin, sont coaxiaux et logés l'un dans l'autre. Cet agencement permet de bénéficier d'une raideur globale relativement importante dans un encombrement réduit.

Le premier siège 38F est fixe, c'est-à-dire que sa position est indépendante de l'allongement des ressorts 34, 36. Le second siège 38M est mobile, c'est-à-dire que sa position dépend de l'allongement des ressorts 34, 36.

Le siège mobile 38M forme, dans l'exemple représenté sur la figure 1, un boîtier parallélépipédique dans lequel sont logés partiellement les ressorts 34, 36.

Le siège mobile 38M est guidé sensiblement parallèlement à l'axe des ressorts 34, 36 à l'aide de moyens classiques tels qu'une paroi 40 d'un carter dans lequel sont logés les moyens d'assistance 28.

Une came 42, solidaire du levier d'assistance 30, est intercalée entre les extrémités d'appui 30A et de résistance 30R de ce levier d'assistance 30.

Dans l'exemple représenté sur la figure 1, le levier d'assistance 30 a une forme générale plane sensiblement perpendiculaire à l'axe d'articulation X et la came 42 est rapportée sur une face de ce levier 30.

Le siège fixe 38F est intercalé sensiblement entre l'extrémité d'appui 30A du levier d'assistance 30 et la came 42 solidaire de ce levier 30. Ainsi, les ressorts de poussée 34, 36 sont logés sensiblement entre l'axe d'articulation X et la came 42.

Le siège mobile 38M porte un organe de contact destiné à coopérer avec la came 42. De préférence, l'organe de contact comprend au moins un galet 44 destiné à rouler sur la came 42.

Dans le premier mode de réalisation de l'invention, l'organe de contact comprend deux galets 44A, 44B destinés à rouler sur la came 42. Ces deux galets 44 A, 44B sont disposés l'un derrière l'autre en considérant le sens du déplacement du levier 30.

Ainsi, malgré la dimension relativement réduite de la came 42, au moins un des galets 44B portés par le siège mobile 40 reste en contact avec cette came 42, même lorsque la course angulaire du levier d'assistance 30 est relativement importante. Ce galet permet de reprendre l'effort lors du guidage du siège mobile 38M dans son mouvement de translation le long de l'axe des ressorts, l'effort étant fonction de la pente de la came.

L'organe menant est relié cinématiquement au levier d'assistance 30. En effet, le pignon 14 engrène avec une denture complémentaire 46 portée par l'extrémité de résistance 30R du levier d'assistance 30.

Les extrémités de l'organe mené 18 sont avantageusement reliées de façon rotulante l'une au piston 20 et l'autre au levier d'assistance 30. Plus particulièrement, l'organe mené 18 est relié à l'extrémité de résistance 30R du levier d'assistance 30, soit directement, soit en étant relié à la denture 46 portée par ce levier d'assistance 30.

On précisera ci-dessous les principaux aspects du fonctionnement du dispositif de commande 10 liés à l'invention.

On considère initialement le dispositif de commande 10 dans une position de repos dans laquelle l'embrayage est par exemple dans une configuration embrayée. Le volume de la chambre 24 du vérin est maximal. Au moins un galet 44A des moyens d'assistance 28 coopère avec une première partie 42A de la surface de la came 42. Cette partie de surface 42A est sensiblement perpendiculaire à l'axe des ressorts 34, 36.

Pour placer l'embrayage dans une configuration débrayée, le moteur électrique 12 est activé de façon à entraîner le pignon 14 dans un sens de débrayage. Ce dernier, engrenant avec la denture 46 du levier d'assistance 30, déplace ce levier 30 de façon à entraîner l'organe mené 18 et le piston 20 dans un sens de diminution du volume de la chambre 24. Comme le débattement angulaire du levier d'assistance 30 est relativement réduit, le déplacement de l'organe mené 18 est sensiblement rectiligne.

Du fait de ce déplacement du levier d'assistance 30, la position relative des galets 44 par rapport à la came 42 est modifiée de façon qu'au moins un galet 44A coopère avec une seconde partie 42B de la surface de la came. Cette partie de surface 42B est inclinée par rapport à l'axe des ressorts 34, 36.

Par effet de rampe entre la came 42 et le galet 44A en contact avec celle-ci, le levier d'assistance 30 est sollicité élastiquement dans le même sens que celui imposé par la rotation du pignon 14 dans le sens de débrayage.

Les moyens d'assistance 28 permettent donc d'assister le déplacement de l'organe mené 18 lors du passage d'une configuration embrayée à une configuration débrayée de l'embrayage.

On notera que les moyens 16 à engrenage de type épicycloïdal ainsi que le levier articulé 30 et les galets 44 rotatifs forment des moyens mécaniques peu sensibles aux frottements, assurant un rendement du dispositif de commande 10 performant.

Toutefois, les frottements subis par ces moyens mécaniques articulés ou pivotants, bien que faibles, sont suffisants pour assurer l'irréversibilité du dispositif de commande lorsque le moteur électrique 12 est désactivé. Ainsi, lorsque l'embrayage est placé dans une configuration intermédiaire entre ses configurations embrayée et débrayée, la désactivation du moteur électrique 12 ne perturbe pas la stabilité de cette configuration intermédiaire. En effet, l'organe mené 18 reste dans une position intermédiaire stable du fait que les forces de l'embrayage tendant à replacer cet embrayage en configuration embrayée et sollicitant l'organe mené 18 sont au moins équilibrées par les frottements subis par les différentes pièces mobiles du dispositif de commande 10.

Bien entendu, la chaîne de commande hydraulique ou mécanique entre le dispositif de commande 10 et l'embrayage pourra comporter avantageusement des moyens classiques de réglage de la longueur de cette chaîne.

Dans le cas d'une commande mécanique, les moyens de réglage de longueur de la chaîne de commande pourront, le cas échéant, être remplacés par des moyens classiques de rattrapage d'usure, agencés dans l'embrayage, et/ou des moyens classiques de réglage manuel de longueur mis en oeuvre lors du montage du dispositif de commande 10 et de l'embrayage dans le véhicule.

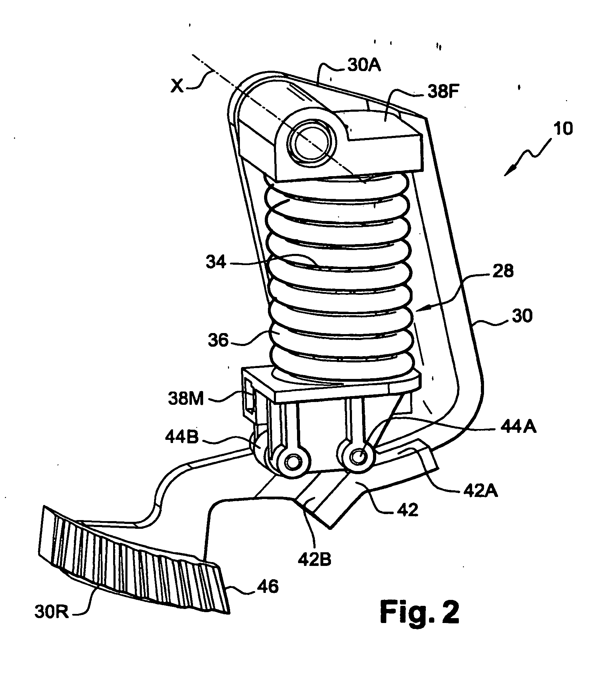

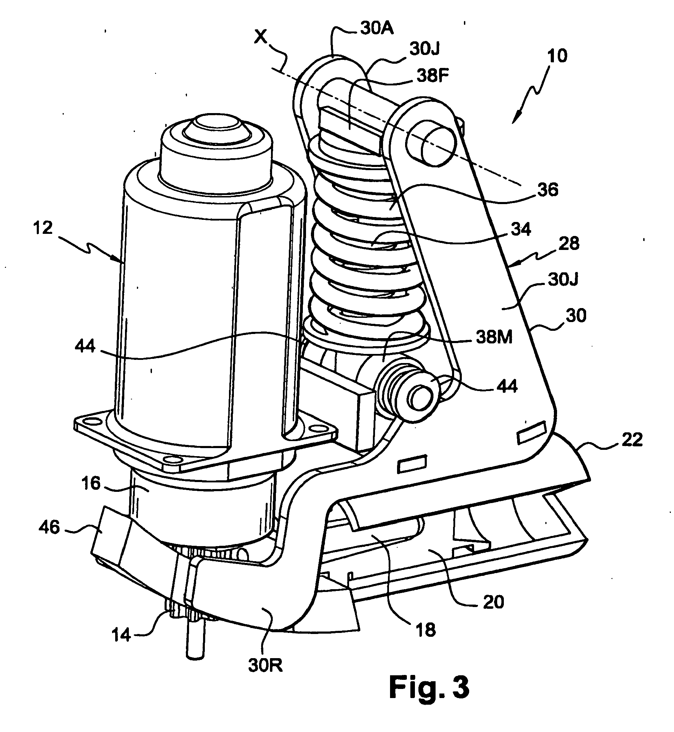

Sur les figures 2 et 3, on a représenté un dispositif de commande 10 selon respectivement des deuxième et troisième modes de réalisation de l'invention.

Sur ces figures, les éléments analogues à ceux de la figure 1 sont désignés par des références identiques.

Dans le cas du second mode de réalisation de l'invention illustré sur la figure 2, la came 42 est venue de matière avec le levier d'assistance 30. Plus particulièrement, le levier d'assistance 30 est formé dans une tôle et la came 42 est formée par une partie pliée de cette tôle.

Dans le cas du troisième mode de réalisation de l'invention illustré sur la figure 3, le levier d'assistance 30 comprend deux joues 30J sensiblement planes, entretoisées parallèlement à l'axe X d'articulation du levier.

La came 42 comprend une surface de came ménagée sur chaque joue 30J, de préférence sur la tranche de chaque joue 30J.

Les ressorts de poussée 34, 36 s'étendent entre les deux joues 30J.

Par ailleurs, l'organe de contact porté par le siège mobile 38M comprend deux galets 44, coaxiaux, destinés à rouler sur les surfaces de came des deux joues 30J.

## Revendications

1. Dispositif de commande du type comprenant :
- un organe menant relié cinématiquement à un organe mené (18), et
- des moyens (28) d'assistance à l'entraînement de l'organe mené (18) munis de moyens (32) de sollicitation élastique de l'organe mené (18),
**caractérisé en ce que** les moyens d'assistance (28) comprennent un levier (30) du troisième genre muni d'une extrémité, dite extrémité d'appui (30A), articulée autour d'un axe géométrique fixe (X), et d'une extrémité reliée à l'organe mené (18), dite extrémité de résistance (30R), les moyens de sollicitation élastique (32) appliquant un effort élastique d'assistance entre les extrémités d'appui et de résistance (30R) du levier d'assistance (30), l'organe menant étant relié cinématiquement au levier d'assistance (30).

2. Dispositif de commande selon la revendication 1, dans lequel les moyens de sollicitation élastique (32) comprennent au moins un ressort de poussée (34, 36) agencé entre des sièges fixe (38F) et mobile (38M), le siège mobile (38M) portant un organe de contact (44 A, 448) destiné à coopérer avec une came (42), solidaire du levier d'assistance (30), intercalée entre les extrémités d'appui (30A) et de résistance (30R) de ce levier d'assistance (30).

3. Dispositif de commande selon la revendication 2, dans lequel la came (42) est rapportée sur le levier d'assistance (30).

4. Dispositif de commande selon la revendication 2, dans lequel la came (42) est venue de matière avec le levier d'assistance (30).

5. Dispositif de commande selon la revendication 4, dans lequel le levier (30) comprend deux joues (30J) sensiblement planes, entretoisées parallèlement à l'axe (X) d'articulation de ce levier (30), la came (42) comprenant une surface de came ménagée sur chaque joue (30J), de préférence sur la tranche de chaque joue (30J), le ressort de poussée (34, 36) s'étendant entre les deux joues (30J).

6. Dispositif de commande selon l'une quelconque des revendications 2 à 5, dans lequel les moyens de sollicitation élastique (32) comprennent deux ressorts de poussée (34, 36) coaxiaux logés l'un dans l'autre.

7. Dispositif de commande selon l'une quelconque des revendications 2 à 6, dans lequel le siège fixe (38F) est intercalé sensiblement entre l'extrémité d'appui (30A) du levier d'assistance (30) et la came (42) solidaire de ce levier (30).

8. Dispositif de commande selon l'une quelconque des revendications 2 à 7, dans lequel l'organe de contact comprend au moins un galet (44 A, 44B) destiné à rouler sur la came (42).

9. Dispositif de commande selon la revendication 8, dans lequel l'organe de contact comprend deux galets (44 A, 448) destinés à rouler sur la came (42), disposés l'un derrière l'autre en considérant le sens de déplacement du levier d'assistance (30).

10. Dispositif de commande selon les revendications 5 et 8 prises ensemble, dans lequel l'organe de contact comprend deux galets coaxiaux (44) destinés à rouler sur les surfaces de came des deux joues (30J).

11. Dispositif de commande selon l'une quelconque des revendications précédentes, dans lequel l'organe menant est un arbre de moteur électrique (12) couplé à un pignon (14) engrenant avec une denture complémentaire (46) portée par l'extrémité de résistance (30R) du levier d'assistance (30),

12. Dispositif de commande selon la revendication 11, dans lequel l'arbre de moteur électrique (12) est couplé au pignon (14) par des moyens (16) à engrenage, notamment des moyens de réduction de type épicycloïdal.

13. Dispositif de commande selon l'une quelconque des revendications précédentes, dans lequel l'organe mené est solidaire d'une tige (18) de piston (20) de vérin hydraulique ou d'un élément de tringlerie de commande.

14. Dispositif de commande selon l'une quelconque des revendications précédentes, dans lequel l'organe mené (18) est destiné à être relié à un embrayage de véhicule automobile.

## Claims

1. Control device, of the type comprising:
- a drive unit which is connected kinematically to a driven unit (18); and
- means for assistance (28) in driving the driven unit (18) which are provided with means (32) for resilient thrusting of the driven unit (18),
**characterised in that** the assistance means (28) comprise a lever (30) of the third type which is provided with an end, known as the support end (30A), which is articulated around a geometrically fixed axis (X), and with an end which is connected to the driven unit (18), known as the resistance end (30R), the resilient thrust means (32) applying resilient assistance force between the support end and the resistance end (30R) of the assistance lever (30), the drive unit being connected kinematically to the assistance lever (30).

2. Control device according to claim 1, wherein the resilient thrust means (32) comprise at least one thrust spring (34, 36) which is arranged between the fixed (38F) and mobile (38M) seats, the mobile seat (38M) bearing a contact unit (44A, 44B) which is designed to co-operate with a cam (42) which is integral with the assistance lever (30), and is interposed between the support end (30A) and the resistance end (30R) of this assistance lever (30).

3. Control device according to claim 2, the cam (42) is added onto the assistance lever (30).

4. Control device according to claim 2, wherein the cam (42) is integral with the assistance lever (30).

5. Control device according to claim 4, wherein the lever (30) comprises two substantially flat cheeks (30J) which are braced parallel to the axis (X) of articulation of this lever (30), the cam (42) comprising a cam surface which is provided on each cheek (30J), preferably on the section of each cheek (30J), the thrust spring (34, 36) extending between the two cheeks (30J).

6. Control device according to any one of claims 2 to 5, wherein the resilient thrust means (32) comprise two coaxial thrust springs (34, 36) which are accommodated one in the other.

7. Control device according to any one of claims 2 to 6, wherein the fixed seat (38F) is interposed substantially between the support end (30A) of the assistance lever (30) and the cam (42) which is integral with this lever (30).

8. Control device according to any one of claims 2 to 7, wherein the contact unit comprises at least roller (44A, 44B) which is designed to roll on the cam (42).

9. Control device according to claim 8, wherein the contact unit comprises two rollers (44A, 44B) which are designed to roll on the cam (42), and are disposed one behind the other, taking into consideration the direction of displacement of the assistance lever (30).

10. Control device according to claims 5 and 8 taken together, wherein the contact unit comprises two coaxial rollers (44) which are designed to roll on the cam surfaces of the two cheeks (38J).

11. Control device according to any one of the preceding claims, wherein the drive unit is an electric motor shaft (12) which is coupled to a pinion (14) which engages with complementary toothing (46) which is supported by the resistance end (30R) of the assistance lever (30).

12. Control device according to claim 11, wherein the electric motor shaft (12) is coupled to the pinion (14) by gear means (16), and in particular by reduction means of an epicycloidal type.

13. Control device according to any one of the preceding claims, wherein the driven unit is integral with a rod (18) of a piston (20) of a hydraulic jack, or with a control rod assembly element.

14. Control device according to any one of the preceding claims, wherein the driven unit (18) is designed to be connected to a motor vehicle clutch.

## Patentansprüche

1. Betätigungsvorrichtung (10), umfassend:
- ein kinematisch mit einem Abtriebsorgan (18) verbundenes Antriebsorgan, und
- Unterstützungsmittel (28) zum Antrieb des Abtrieborgans (18), die mit Mitteln (32) zur elastischen Beaufschlagung des Abtriebsorgans (18) versehen sind,
**dadurch gekennzeichnet, dass** die Unterstützungsmittel (28) einen Hebel (30) dritter Ordnung umfassen, der mit einem als Auflager-Ende (30A) bezeichneten Ende versehen ist, welches um eine geometrisch festliegende Achse (X) herum schwenkbar angeordnet ist, und mit einem als Last-Ende (30R) bezeichneten Ende, das mit dem Abtrieborgan (18) verbunden ist, wobei die elastischen Beaufschlagungsmittel (32) zwischen dem Auflager-Ende und dem Last-Ende (30R) des Unterstützungshebeis (30) eine elastische Unterstützungskraft aufbringen, und wobei das Antriebsorgan kinematisch mit dem Unterstützungshebel (30) verbunden ist.

2. Betätigungsvorrichtung nach Anspruch 1, wobei die elastischen Beaufschlagungsmittel (32) mindestens eine zwischen einem festen Sitz (38F) und einem beweglichen Sitz (38M) angeordnete Druckfeder (34, 36) umfassen, wobei der bewegliche Sitz (38M) ein Kontaktorgan (44A, 44B) trägt, das dazu bestimmt ist, mit einem Nocken (42) zusammenzuwirken, welcher fest mit dem Unterstützungshebel (30) verbunden und zwischen dem Auflager-Ende (30A) und dem Last-Ende (30R) dieses Unterstützungshebels (30) eingefügt ist.

3. Betätigungsvorrichtung nach Anspruch 2, wobei der Nocken (42) an dem Unterstützungshebel (30) angebracht ist.

4. Betätigungsvorrichtung nach Anspruch 2, wobei der Nocken (42) einstückig mit dem Unterstützungshebel (30) ausgeführt ist.

5. Betätigungsvorrichtung nach Anspruch 4, wobei der Hebel (30) zwei in etwa ebene Wangen (30J) umfasst, die parallel zur Drehachse (X) dieses Hebels (30) abgestützt sind, wobei der Nocken (42) eine in jede Wange (30J), vorzugsweise in den Rand jeder Wange (30J) eingebrachte Nockenfläche umfasst, wobei sich die Druckfeder (34, 36) zwischen den beiden Wangen (30J) erstreckt.

6. Betätigungsvorrichtung nach einem der Ansprüche 2 bis 5, wobei die elastischen Beaufschlagungsmittel (32) zwei koaxial ineinander angeordnete Druckfedern (34, 36) umfasst.

7. Betätigungsvorrichtung nach einem der Ansprüche 2 bis 6, wobei der feste Sitz (38F) in etwa zwischen dem Auflager-Ende (30A) des Unterstützungshebels (30) und dem fest mit diesem Hebel (30) verbundenen Nocken (42) eingefügt ist.

8. Betätigungsvorrichtung nach einem der Ansprüche 2 bis 7, wobei das Kontaktorgan mindestens eine Rolle (44A, 44B) umfasst, die dazu bestimmt ist, auf dem Nocken (42) abzurollen.

9. Betätigungsvorrichtung nach Anspruch 8, wobei das Kontaktorgan zwei zum Abrollen auf dem Nocken (42) bestimmte Rollen (44A, 44B) umfasst, die bezogen auf den Bewegungssinn des Unterstützungshebels (30) hintereinander angeordnet sind.

10. Betätigungsvorrichtung nach Anspruch 5 in Kombination mit Anspruch 8, wobei das Kontaktorgan zwei koaxiale Rollen (44) umfasst, die dazu bestimmt sind, auf den Nockenflächen der beiden Wangen (30J) abzurollen.

11. Betätigungsvorrichtung nach einem der vorherigen Ansprüche, wobei das Antriebsorgan die Welle eines Elektromotors (12) ist, die mit einem Ritzel (14) gekoppelt ist, welches in eine komplementäre Zahnung (46) eingreift, die von dem Last-Ende (30R) des Unterstützungshebels (30) getragen ist.

12. Betätigungsvorrichtung nach Anspruch 11, wobei die Welle des Elektromotors (12) mit dem Ritzel (14) über Getriebemittel gekoppelt ist, insbesondere über epizykloide Untersetzungsmittel.

13. Betätigungsvorrichtung nach einem der vorherigen Ansprüche, wobei das Abtriebsorgan fest mit der Kolbenstange (18) eines hydraulischen Zylinders (20) oder mit einem Element eines Betätigungsgestänges verbunden ist.

14. Betätigungsvorrichtung nach einem der vorherigen Ansprüche, wobei das Abtriebsorgan (18) dazu bestimmt ist, mit einer Kupplung eines Kraftfahrzeugs verbunden zu werden.
